**Europäisches Patentamt**

(19) **European Patent Office**

**Office européen des brevets**

(11) Numéro de publication: **0 125 723**
**B1**

(12) **FASCICULE DE BREVET EUROPEEN**

(45) Date de publication du fascicule du brevet:
**26.08.87**

(51) Int. Cl.⁴: **H 04 L 27/00**

(21) Numéro de dépôt: **84200648.8**

(22) Date de dépôt: **08.05.84**

(54) **Dispositif d'égalisation en fréquence porteuse commandé à partir de la bande de base.**

(30) Priorité: **11.05.83 FR 8307909**

(43) Date de publication de la demande:
**21.11.84 Bulletin 84/47**

(45) Mention de la délivrance du brevet:
**26.08.87 Bulletin 87/35**

(84) Etats contractants désignés:
**BE CH DE FR GB IT LI NL SE**

(56) Documents cités:
**EP - A - 0 055 922**
**US - A - 3 818 347**

**IEEE TRANSACTIONS ON COMMUNICATIONS, vol.
COM-28, no. 8, août 1980, pages 1142-1153, IEEE, New
York, US; R.W. CHANG et al.: "Carrier recovery for data
communication systems with adaptive equalization"**

(73) Titulaire: **TELECOMMUNICATIONS
RADIOELECTRIQUES ET TELEPHONIQUES T.R.T.,
88, rue Brillat Savarin, F-75013 Paris (FR)**

(72) Inventeur: **Bonnerot, Georges SOCIETE CIVILE
S.P.I.D., 209 rue de l'Université, 75007 Paris (FR)**
Inventeur: **Bourgeade, Laurent SOCIETE CIVILE
S.P.I.D., 209 rue de l'Université, 75007 Paris (FR)**

(74) Mandataire: **Chaffraix, Jean et al, Société Civile
S.P.I.D. 209, rue de l'Université, F-75007 Paris (FR)**

## Description

L'invention concerne un dispositif d'égalisation en fréquence porteuse commandé à partir de la bande de base comportant un circuit de correction pour des signaux de données transmis par fréquence porteuse, un premier circuit de démodulation, coopérant avec un circuit de reconstitution de porteuse, pour transformer ces signaux de données à fréquence porteuse en signaux en bande de base et un circuit de commande pour agir sur des éléments variables dont est muni le circuit de correction, à partir de l'erreur estimée sur les signaux en bande de base.

Ce genre de dispositif trouve des applications importantes, par exemple dans les récepteurs de systèmes de transmission numérique à haut débit utilisant notamment une transmission par faisceaux hertziens. Pour obtenir ces hauts débits on module en phase et en amplitude deux composantes en quadrature d'une fréquence porteuse (cas, notamment de la modulation MAQ 16). Par suite de la constitution des récepteurs le signal de donnée à traiter se trouve en fréquence intermédiaire de sorte que la fréquence de porteuse à considérer est cette fréquence intermédiaire.

Un tel dispositif est décrit dans la demande de brevet européen publiée sous le N° 0 055 922. Dans ce dispositif connu, le circuit de correction est formé d'une partie non récursive. Or, une liaison utilisant des faisceaux hertziens peut se décomposer en première approximation en deux trajets: un premier trajet qui est le plus direct et un deuxième trajet qui est un peu plus long, de sorte que la fonction de transfert H(v) de la liaison peut s'écrire:

$$H(v) = 1 + \rho e^{\varphi i}\, e^{-2i\pi v Z}$$

où v est la fréquence,

$\rho$ est l'amplitude relative de l'onde empruntant le deuxième trajet.

$\varphi$ est le changement de phase de l'onde du deuxième trajet.

$\tau$ est le retard du deuxième trajet par rapport au premier.

Le dispositif d'égalisation décrit ne peut compenser une telle fonction de transfert H(v) qu'au prix d'une multiplication des étages à retard pour éviter le pôle de la fonction $H^{-1}(v)$. Ce dispositif connu est donc mal adapté pour égaliser des liaisons par faisceaux hertziens.

La présente invention propose un dispositif du genre mentionné dans le préambule bien adapté à l'égalisation de liaison par faisceaux hertziens notamment; pour cela, il est caractérisé en ce que le circuit de correction comporte au moins une partie récursive pour faire correspondre à un signal d'entrée x(t) en fréquence porteuse, fonction continue du temps «t», un signal de sortie v(t) en fréquence porteuse, fonction continue du temps selon la relation:

$$v(t) = \sum_{l=1}^{M} r_l e^{i\Psi_l} v(t-\tau_l) + \sum_{j=0}^{N} \rho_j e^{i\Phi_j} x(t-\tau_j)$$

où $r_l$, $\psi_l$, $\rho_j$, $\Phi_j$ peuvent être des éléments variables, où il existe au moins un «l» tel que $r_l \neq 0$, et où $\tau_j$, $\tau_l$ sont des retards fixes et M et N des constantes.

Il comporte avantageusement un amplificateur placé en amont du premier circuit de démodulation muni d'une commande de gain reliée à un organe de commande de gain pour garder constante, en moyenne la porportion des signaux ayant au moins une de leurs coordonnées supérieure à la valeur nominale normale.

Un avantage de l'invention est que les valeurs des éléments variables des circuits de correction ne sont pas affectées par l'état du circuit de reconstitution de porteuse ce qui amène l'avantage important suivant:

– un tel dispositif, associé à un démodulateur utilisant notamment le dispositif de récupération de porteuse décrit dans la demande de brevet européen N° 0 055 922 et comportant une CAG, égalise même en l'absence de synchronisation de la porteuse reconstituée avec la porteuse reçue.

Un autre avantage de l'invention est que le dispositif de récupération de porteuse bénéficie de l'égalisation.

Selon l'invention les filtres de correction sont formés d'éléments variables travaillant à la fréquence porteuse.

Cette caractéristique amène l'avantage qu'il n'y a pas lieu de prévoir une voie en phase et une voie en quadrature et de circuits d'égalisation pour chacune de ces voies.

Avantageusement, le circuit de correction est formé d'un deuxième circuit de démodulation coopérant avec un circuit d'oscillation à fréquence prédéterminée égale à la valeur nominale de la fréquence de porteuse, de circuits d'égalisation opérant sur les signaux de sortie du deuxième circuit de démodulation et d'un circuit de modulation coopérant avec ledit circuit d'oscillation à fréquence prédéterminée pour fournir des signaux d'entrée du premier circuit de démodulation.

Cette caractéristique amène l'avantage que le circuit d'égalisation travaille à des fréquences plus basses, ce qui peut faciliter la réalisation de ce circuit de correction lorsqu'on envisage la nécessité de beaucoup d'éléments variables tout en maintenant l'indépendance des paramètres variables de l'égaliseur vis à vis de l'état du système de récupération de porteuse.

La description suivante faite en regard des dessins annexés, le tout donné à titre d'exemple non limitatif, fera bien comprendre comment l'invention peut être réalisée.

La figure 1 montre un schéma d'un dispositif d'égalisation conforme à l'invention.

Les figures 2a à 2g montrent des exemples de réalisation de circuit de correction convenant pour des dispositifs d'égalisation conformes à l'invention.

La figure 3 représente la répartition des états pour un signal d'entrée modulé selon la modulation MAQ 16.

La figure 4 montre un schéma du mode de réalisation préféré d'un dispositif d'égalisation conforme à l'invention.

La figure 5 montre un mode de réalisation possible d'un circuit de traitement convenant pour le dispositif d'égalisation de la figure 4.

La figure 6 montre un schéma de l'organe de commande de l'amplificateur CAG.

La figure 7 montre un exemple de réalisation du circuit de commande faisant partie du dispositif de la figure 4.

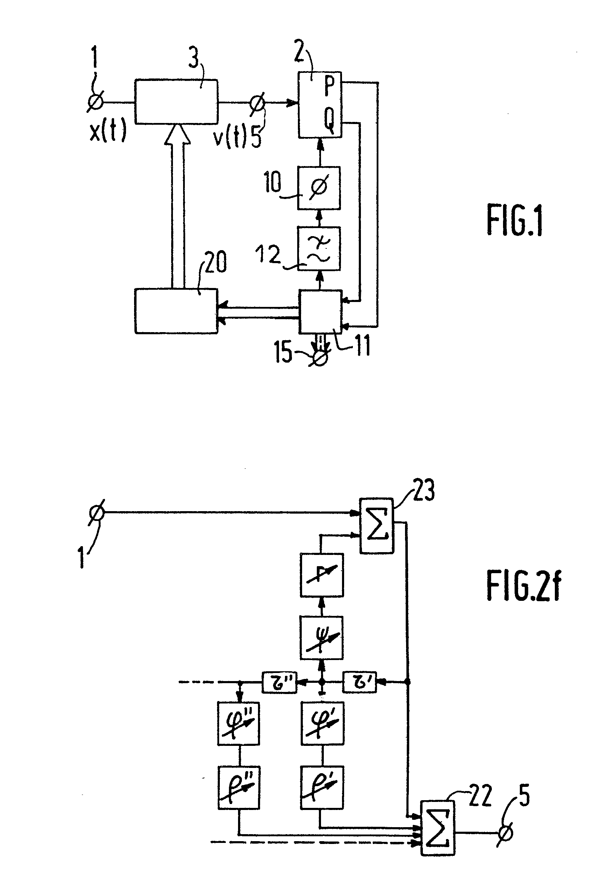

La figure 1 représente un dispositif d'égalisation conforme à l'invention. A la borne 1 on reçoit des signaux d'entrée présentant une modulation en phase et en amplitude d'une porteuse. Ce signal est dégradé par le bruit et perturbé par la transmission. Pour obtenir une démodulation convenable au moyen du démodulateur 2, on a prévu un circuit de correction 3 dont l'entrée est reliée à la borne 1 et dont la borne de sortie 5 est connectée à l'entrée du démodulateur 2. Les signaux de sortie de ce démodulateur disponibles à ses sorties P et Q sont la projection de l'amplitude du signal à la borne 5 sur les composantes en phase P et en quadrature Q du signal de sortie d'un oscillateur 10.

Un circuit de traitement 11 fournit par l'intermédiaire d'un filtre passe-bas 12 un signal de correction à l'oscillateur 10 comportant à cet effet une commande de fréquence; ce circuit fournit aussi sur une borne de sortie 15 les données en bande de base pour l'utilisation et aussi des signaux en bande de base pour un circuit de commande 20 qui agit sur les éléments variables que comporte le circuit 3.

Le circuit de correction fait correspondre à un signal d'entrée x(t) en fréquence porteuse, fonction continue du temps, un signal de sortie v(t) en fréquence porteuse, fonction continue du temps selon la relation:

$$v(t) = \sum_{l=1}^{M} r_l e^{i\Psi_l} v(t-\tau_l) + \sum_{j=o}^{N} \rho_j e^{i\Phi_j} x(t-\tau_j)$$

où $r_l$, $\psi_l$, $\rho_j$, $\Phi_j$ peuvent être des éléments variables, où il existe au moins une valeur de «l» tel que $r_l \# 0$, et où $\tau_j$, $\tau_l$ sont des retards fixes et M et N des constantes.

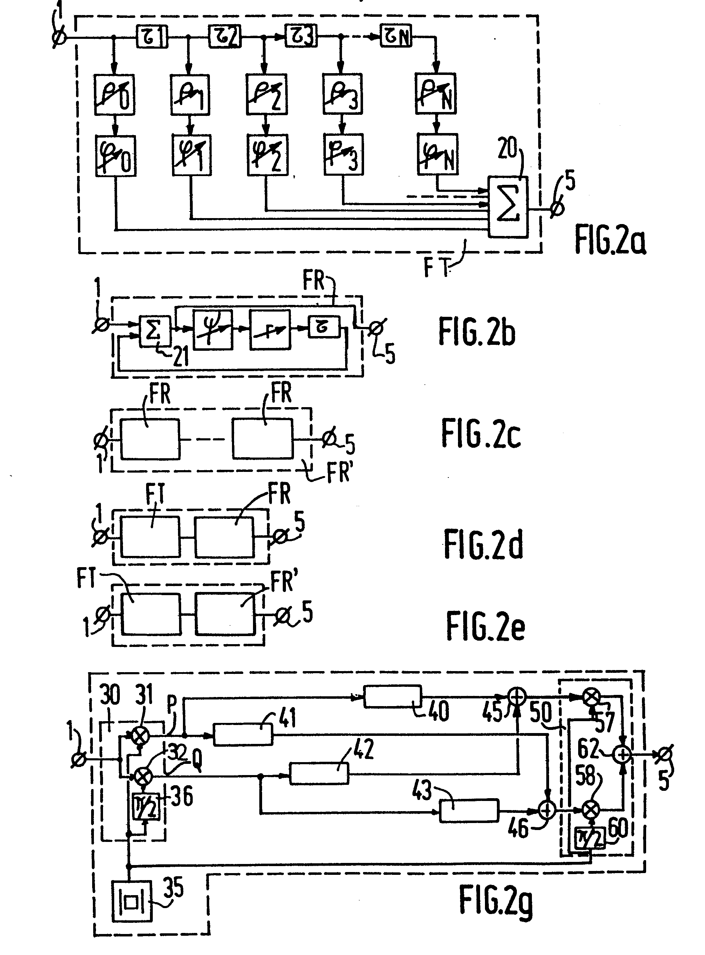

La figure 2a montre un exemple de réalisation en soi connu, d'une partie non récursive d'un circuit de correction convenant pour le dispositif d'égalisation conforme à l'invention. C'est un filtre transversal FT. Cette partie est constituée à partir d'un montage en cascade de N éléments de retard amenant respectivement un retard $\tau_1$, $\tau_2$, $\tau_3 \ldots \tau_N$. Entre la borne 1 et l'élément de retard amenant un retard $\tau_1$, on a prévu un point de branchement sur lequel est connecté un élément multiplicateur par un paramètre variable $\rho_0$ suivi d'un déphaseur variable par $\Phi_0$. D'une façon identique, entre les éléments à retard ($\tau_1$, $\tau_2$) ($\tau_2$, $\tau_3$) ($\tau_3$, ...) (..., $\tau_N$) ainsi qu'à la sortie de l'élément ($\tau_N$) sont prévus différents points de branchement sur lesquels sont connectés respectivement des éléments multiplicateurs ($\rho_1$, $\rho_2$, $\rho_3$, ... $\rho_N$) suivis de déphaseurs variables ($\Phi_1$, $\Phi_2$, $\Phi_3 \ldots \Phi_N$). Un sommateur 20 fournit à la borne 5 la somme des signaux issus de ces différentes branches.

La figure 2b montre un circuit de correction ayant une fonction récursive FR, c'est-à-dire que dans la formule (1) il faut considérer $\rho_j=0$ pour tout j=1 à N et $\tau_o=0$. Pour éviter tous problèmes de contrôle de la stabilité de structures récursives, des mises en cascade de structures à un seul élément à retard sont utilisées; cette structure se compose d'un sommateur 21. La sortie de ce sommateur est reliée à une de ses entrées par l'intermédiaire d'un déphaseur variable ($\psi$), d'un élément multiplicateur par un paramètre (r) et d'un élément à retard ($\tau$), l'entrée est reliée à la borne 1 tandis que sa sortie est reliée à la borne 5.

La figure 2c montre un circuit de correction ayant aussi une structure récursive FR'; elle est formée par le montage en cascade d'une pluralité de structures FR.

Les figures 2d et 2e montrent un circuit de correction formé d'un filtre transversal FR monté en cascade avec une structure récursive de type FR (figure 2d) ou avec une structure récursive de type FR' (figure 2e).

La figure 2f montre un circuit de correction ayant une structure dite canonique. Cette structure est élaborée autour d'un montage en cascade d'éléments de retard ($\tau'$, $\tau'' \ldots$). Ce montage est utilisé à la fois pour former une structure transversale et pour former une structure récursive. La structure transversale comporte, outre ce montage, un sommateur 22 pour effectuer la somme des signaux issus de différentes branches connectées en différents points du montage, ces branches comportant des éléments déphaseurs variables $\Phi'$, $\Phi'' \ldots$ et des éléments multiplicateurs p' et p''. La structure récursive comporte, outre le montage d'éléments de retard, un sommateur 23 dont la sortie est connectée à une entrée du sommateur 22 et qui effectue la somme du signal à la borne 1 et des signaux issus d'une branche de préférence dans laquelle sont insérés un élément déphaseur variable $\psi$ et un élément multiplicateur r.

La figure 2g montre un circuit de correction qui travaille en bande de base mais qui obéit à la relation (1). Il se compose tout d'abord d'un démodulateur à quadrature 30 dont on a détaillé la structure. Ce démodulateur est formé, comme cela est bien connu, de deux démodulateurs élémentaires 31 et 32 dont une entrée est reliée à la borne 1; l'autre entrée du modulateur 31 est reliée à la sortie d'un oscillateur à quartz 35 et l'autre entrée du modulateur 32 à la sortie d'un déphaseur 36 déphasant de 90° le signal de sortie de l'oscillateur 35. La sortie P de ce détecteur est constituée par le sortie du modulateur 31 et la sortie Q par celle du modulateur 32. Les références 40, 41, 42, 43 indiquent des circuits d'égalisation à paramètres variables qui peuvent être du type transversal, récursif ...

Les entrées des circuits 40 et 41 sont reliées à la sortie P du démodulateur 30, tandis que les entrées des circuits 42 et 43 sont reliées à sa sortie Q. Les sorties des circuits 40 et 42 sont reliées aux entrées d'un additionneur de signaux 45, les sorties des circuits 41 et 43 aux entrées d'un autre additionneur 46. Les signaux de sortie des additionneurs sont remodulés à la fréquence de l'oscillateur 35 par un modulateur à quadrature 50. Ce modulateur 50 est formé de deux modulateurs élémentaires 57 et 58; les deux entrées du modulateur 57 sont reliées respectivement à la sortie de l'additionneur 45 et à la sortie de l'oscillateur 35; les deux entrées du modulateur 58 sont reliées respectivement à la sortie de l'additionneur 46 et d'un déphaseur 60 déphasant de 90° le signal de sortie de l'oscillateur 35. Les sorties des modulateurs 57 et 58 sont reliées aux entrées d'un additionneur 62 dont la sortie est reliée à la borne 5. La fréquence de l'oscillateur 35 est égale à la fréquence nominale de la fréquence porteuse des signaux considérés à la borne 1.

Les différents éléments variables $\rho_j$, $\Phi_j$, $r_l$ et $\psi_l$ sont réglés au moyen du dispositif de commande 20 en utilisant, comme cela sera expliqué en détail par la suite, un algorithme dérivé de l'algorithme du gradient pour rendre minimum l'erreur quadratique moyenne des signaux en bande de base.

A partir de l'erreur instantanée $\vec{e}$ les différents éléments sont ajustés de la manière suivante:

$$\rho_{k+1} = \rho_k - A \qquad \left[ \vec{e}, \frac{\partial \vec{e}}{\partial \rho} \right]$$

$$\Phi_{k+1} = \Phi_k - B \qquad \left[ \vec{e}, \frac{\partial \vec{e}}{\partial \Phi} \right]$$

$$r_{k+1} = r_k - C \qquad \left[ \vec{e}, \frac{\partial \vec{e}}{\partial r} \right]$$

$$\Psi_{k+1} = \Psi_k - D \qquad \left[ \vec{e}, \frac{\partial \vec{e}}{\partial \Psi} \right]$$

L'indice k indique des instants séparés par une valeur T égale à l'inverse de la fréquence de transmission des données et où A, B, C, D sont des fonctions avec, par exemple:

$$A(\vec{x}, \vec{y}) = \delta \, sgn(\vec{x} \cdot \vec{y}) = C(\vec{x}, \vec{y})$$

$$B(\vec{x}, \vec{y}) = \varepsilon \, sgn(\vec{x} \cdot \vec{y}) = D(\vec{x}, \vec{y})$$

$\delta$ et $\varepsilon$ étant des constantes positives et où la fonction sgn est telle que:
sgn x = 1 si x > 0 sgn x = −1 sinon.
ou encore:

$$A(\vec{x}, \vec{y}) = C(\vec{x}, \vec{y}) = +3\delta \text{ si } 0 \quad < \left| \widehat{(\vec{x}, \vec{y})} \right| \quad \leqslant \frac{\Pi}{8}$$

$$= +\delta \text{ si } \frac{\Pi}{8} \quad < \left| \widehat{(\vec{x}, \vec{y})} \right| \quad \leqslant \frac{3\Pi}{8}$$

$$= 0 \text{ si } \frac{3\Pi}{8} \quad < \left| \widehat{(\vec{x}, \vec{y})} \right| \quad \leqslant \frac{5\Pi}{8}$$

$$= -\delta \text{ si } \frac{5\Pi}{8} \quad < \left| \widehat{(\vec{x}, \vec{y})} \right| \quad \leqslant \frac{7\Pi}{8}$$

$$= -3\delta \text{ si } \frac{7\Pi}{8} \quad < \left| \widehat{(\vec{x}, \vec{y})} \right| \quad \leqslant \Pi$$

$$B(\vec{x}, \vec{y}) = D(\vec{x}, \vec{y}) = 0 \text{ si } \frac{3\Pi}{8} \quad < \left| \widehat{(\vec{x}, \vec{y})} \right| \quad < \frac{5\Pi}{8}$$

$$= +\varepsilon \text{ si } 0 \quad \leqslant \left| \widehat{(\vec{x}, \vec{y})} \right| \quad < \frac{3\Pi}{8}$$

$$= +\varepsilon \text{ si } \Pi \quad \geqslant \left| \widehat{(\vec{x}, \vec{y})} \right| \quad > \frac{5\Pi}{8}$$

$\delta$, $\varepsilon$: constantes positives.

Avant d'expliquer plus en détail le mode de réalisation préféré d'un dispositif d'égalisation conforme à l'invention, on rappelle les principes de la modulation MAQ 16 qui est celle des signaux appliqués à l'entrée de ce dispositif préféré conforme à l'invention.

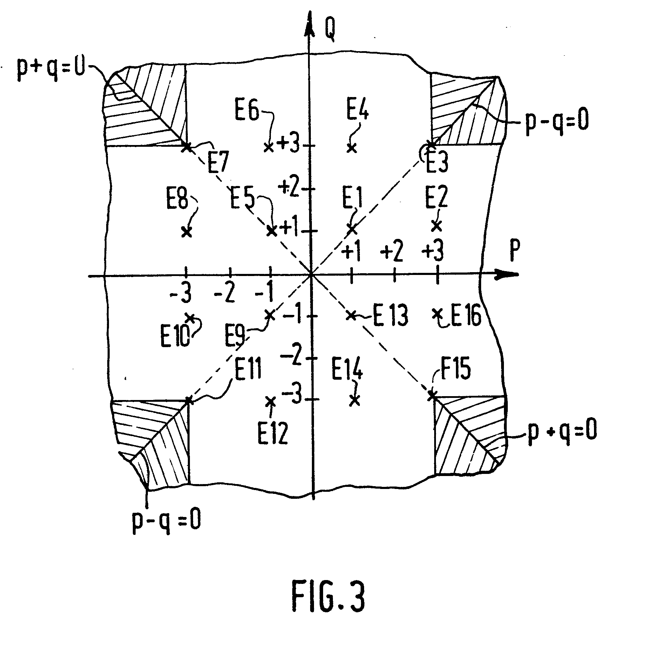

Cette modulation MAQ 16 est une modulation à 16 états; ces états sont repérés sur la figure 3 par E1, E2, E3, ..., E16; l'état E1 est caractérisé par des signaux d'amplitude «1» rapportée sur les composantes P et Q, l'état E3 par des signaux d'amplitude «3» rapportée sur les composantes P et Q, l'état E2 par des signaux d'amplitudes «3» et «1» rapportées respectivement sur les composantes P et Q et l'état E4 par des signaux d'amplitudes «1» et «3» rapportées respectivement sur les composantes P et Q. Les états E5, E6, E7 et E8 occupent des positions symétriques, par rapport à la composante Q aux états E1, E4, E3 et E2. Quant aux états E9, E10, E11, E12, E13, E14, E15 et E16, ils occupent des positions symétriques, par rapport à la composante P, aux états E5, E8, E7, E6, E1, E4, E3 et E2 respectivement.

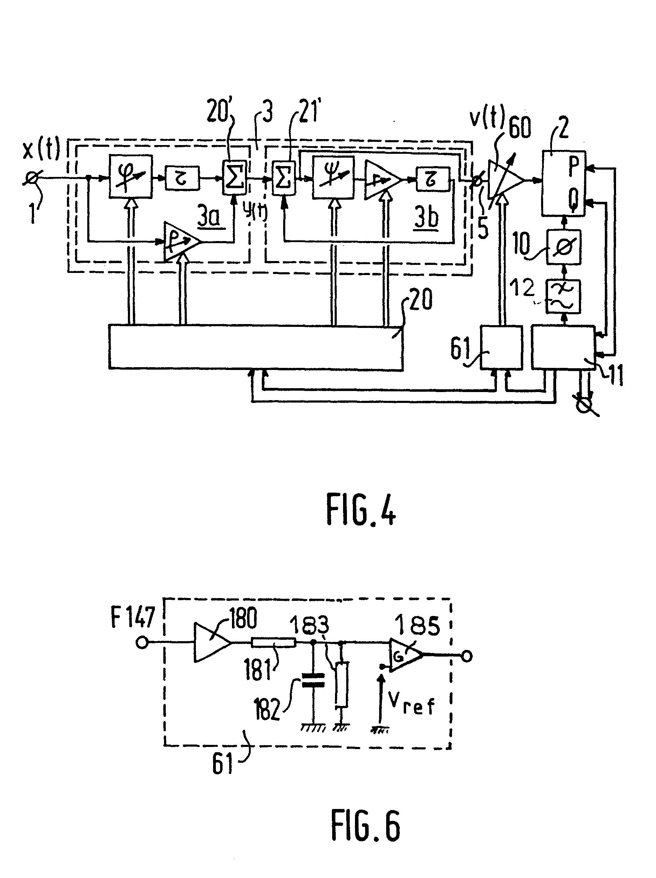

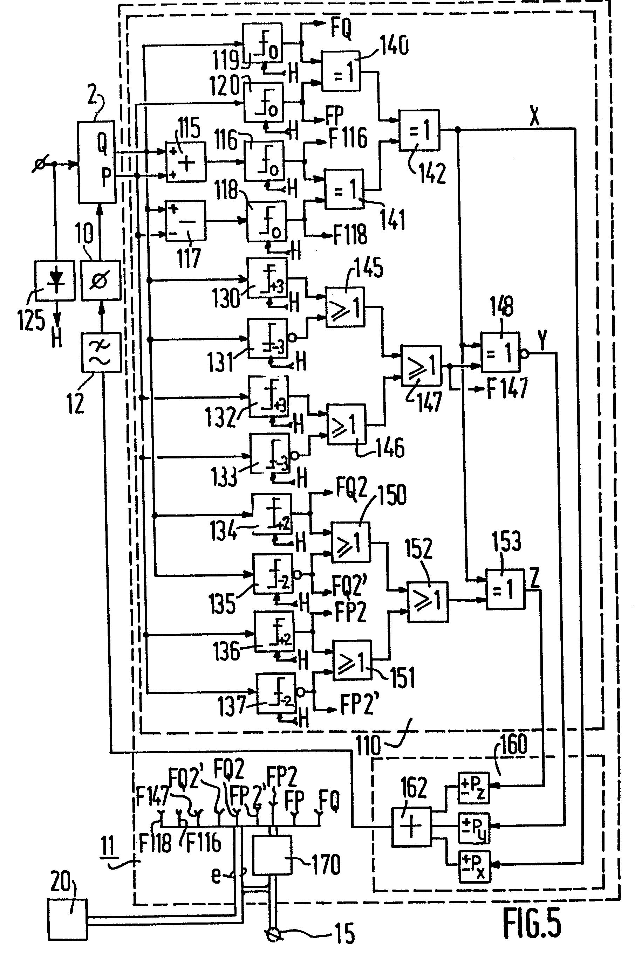

La figure 4 montre le mode de réalisation préféré d'un dispositif d'égalisation conforme à l'invention, les éléments communs à ceux des figures précédentes portant les mêmes références.

Dans un mode de réalisation le circuit de correction est formé de deux parties 3a et 3b, la première est une structure transversale et la seconde une structure récursive. La structure transversale est formée d'un élément déphaseur variable Φ et d'un élément multiplicateur par un paramètre ρ. Les entrées de ces éléments sont connectées à la borne 1. La sortie de l'élément déphaseur Φ est reliée à l'entrée d'un sommateur 20' par l'intermédiaire d'un élément de retard apportant un retard τ. La sortie de l'élément multiplicateur ρ est reliée à l'autre entrée du sommateur 20'. La partie 3b est une structure récursive formée d'un sommateur 21' dont une entrée est connectée à la sortie du sommateur 20' et la sortie à la borne 5. La sortie du sommateur 21' est reliée à son autre entrée par l'intermédiaire de l'élément déphaseur ψ de l'élément multiplicateur r, et d'un autre élément de retard τ. Les deux parties 3a et 3b présentent des fonctions de transfert respectives G( ) et H():

$$G(v) = \rho + e^{i(\Phi - 2\pi v \tau)}$$

$$H(v) = \frac{1}{1 - re^{i(\psi - 2\pi v \tau)}}$$

Le τ est choisi pour que les fonctions de transfert de ces filtres puissent ne présenter respectivement qu'un seul pôle ou qu'un seul zéro dans une bande de fréquence, par exemple

$$\frac{1}{\tau} > \frac{1}{T}$$

où 1/T est égal à la fréquence de modulation.

De plus, pour obtenir une estimation linéaire aisée du signal à la borne 1 aux instants multiples du retard τ, on a pris pour celui-ci un demi-temps symbole soit τ = T/2.

Entre la borne 5 et l'entrée du démodulateur 2, il a été inséré un amplificateur 60 dit amplificateur C A G (de commande automatique de gain) dont le gain est déterminé par un organe de commande de gain automatique 61 contrôlé en fonction de la statistique du signal émis.

La figure 5 montre en détail le circuit de traitement 11. Ce circuit est décrit dans la demande de brevet 83 03 688 déposée le 7 mars 1983 au nom de la Demanderesse. Ce circuit comporte un circuit de détermination de zones 110 qui comprend un additionneur 115, les entrées de cet additionneur 115 étant connectées aux sorties P et Q du détecteur à quadrature 2 et la sortie, connectée à un circuit de décision 116, un organe de soustraction 117 dont l'entrée (+) est connectée à la sortie Q, dont l'entrée (−) est connectée à la sortie P et dont la sortie est connectée à un circuit de décision 118; le circuit 110 comprend aussi un circuit de décision 119 dont l'entrée est connectée à la sortie Q et un circuit de décision 120 dont l'entrée est connectée à la sortie P. Les circuits 116, 118, 119 et 120 fournissent un signal logique de valeur «1» lorsque le signal à leur entrée est supérieur à «0» et la valeur logique «0» si le signal ne l'est pas. Les valeurs logiques à la sortie apparaîssent à la cadence d'apparition des différents états du signal d'état. Pour cela il est prévu, comme cela est connu, un générateur de cadencement 125 qui fournit des signaux H représentant cette cadence d'apparition et ces signaux H sont appliqués aux différents circuits de décision 116, 118, 119 et 120. D'autres circuits de décision sont prévus:

— le circuit 130 dont l'entrée est connectée à la sortie Q fournit un signal «1» pour un signal d'entrée supérieur à «+3» et «0» autrement;

— le circuit 131 dont l'entrée est connectée à la sortie Q fournit un signal «1» pour un signal d'entrée inférieur à «−3» et «0» autrement;

— le circuit 132 dont l'entrée est connectée à la sortie P fournit un signal «1» pour un signal d'entrée supérieur à «+3» et «0» autrement;

— le circuit 133 dont l'entrée est connectée à la sortie P fournit un signal «1» pour un signal d'entrée inférieur à «−3» et «0» autrement;

— le circuit 134 dont l'entrée est connectée à la sortie Q fournit un signal «1» pour un signal d'entrée supérieur à «+2» et «0» autrement;

— le circuit 135 dont l'entrée est connectée à la sortie Q fournit un signal «1» pour un signal d'entrée inférieur à «−2» et «0» autrement;

— le circuit 136 dont l'entrée est connectée à la sortie P fournit un signal «1» pour un signal d'entrée supérieur à «+2» et «0» autrement

— le circuit 137 dont l'entrée est connectée à la sortie P fournit un signal «1» pour un signal d'entrée inférieur à «−2» et «0» autrement.

Différents circuits logiques vont déterminer différentes zones à partir des signaux logique fournis par ces circuits de décision.

Les portes «OU EXCLUSIF» 140, 141 et 142 déterminent des zones X. La porte 142 est munie de deux entrées dont une est connectée à la sortie de la porte 140 et l'autre, à la sortie de la porte 141. Les deux entrées de la porte 140 sont réunies à la sortie des deux circuits de décision 119 et 120 et les deux entrées de la porte 141 à la sortie des circuits 116 et 118. Ces zones X sont délimitées d'une part par les axes P et Q et d'autre part par les droites d'équation p + q = 0 et p − q = 0 où p est la valeur d'abscisse et q la valeur d'ordonnée.

Les portes «OU» 145, 146 et 147 et la porte «OU EXCLUSIF» 148 à sortie inverseuse coopérant avec la porte 142 déterminent des zones Y. La porte 148 est munie d'une première entrée qui est connectée à la sortie de la porte 142 et une deuxième à la sortie de la porte 147. La porte 147 est munie d'une première entrée qui est connectée à la sortie de la porte 145 et d'une deuxième à la sortie de la porte 146; les deux entrées de la porte 145 sont reliées respectivement aux sorties des circuits de décision 130 et 131 et celles de la porte 146 aux sorties des circuits 132 et 133. Dans le plan P, Q les zones sont délimitées d'une part par les axes P, Q et les droites p + q = 0 et p − q = 0 et d'autre part par un carré défini par les droites p = 3, p = −3 q = 3 et q = −3.

Les portes «OU» 150, 151 et 152 et la porte «OU EXCLUSIF» 153 coopérant avec la porte 142 déterminent des zones Z. La porte 153 est munie d'une première entrée qui est connectée à la sortie de la porte 142 et une deuxième à la sortie de la porte 152. La porte 152 est munie d'une première entrée qui est connectée à la sortie de la porte 150 et d'une deuxième à la sortie de la porte 151. Les deux entrées de la porte 150 sont reliées respectivement aux sorties des circuits de décision 134 et 135 et celles de la porte 151 aux sorties des circuits 136 et 137. Dans le plan P, Q les zones Z sont délimitées d'une part par les axes P, Q et les droites p + q = 0, p − q = 0 et d'autre part par un carré défini par les droites p = 2, p = −2, q = 2 et q = −2.

A partir des signaux de sortie des portes 142, 148 et 153 un circuit de pondération 160 fournit un signal au filtre passe-bas intégrateur de la manière suivante:

— aux valeurs logiques «1» des signaux de sortie des portes 142, 148 et 153 on affecte respectivement des valeurs positives +Px, +Py, +Pz et aux valeurs «0», −Px, −Py, −Pz.

— ces valeurs affectées sont ensuite additionnées par un additionneur 162.

Si les valeurs de Px, Py, Pz sont telles que Px = 3,5, Py = 2 et Pz = 0,5 on définit alors des zones de pondération ZP1, ZP2, ZP3, ZP4, ZP5 et ZP6.

A la zone ZP1 délimitée par l'axe P, la droite p − q = 0 et la droite p = 2, la valeur «−2» est affectée.

A la zone ZP2 délimitée par l'axe P, la droite p − q = 0 et la droite p = 2 et la droite p = 3, la valeur «−1» est affectée.

A la zone ZP3 délimitée par l'axe P, la droite p − q = 0 et la droite p = 3, la valeur «−5» est affectée.

Aux zones ZP4, ZP5 et ZP6 symétriques, par rapport à la droite p − q = 0, aux zones ZP1, ZP2 et ZP3 les valeurs «+2», «+1» et «+5» sont respectivement affectées.

Pour les autres quadrants, la répartition des zones se détermine par des rotations successives du premier quadrant autour du point d'intersection des droites P et Q.

Il est intéressant de noter que les circuits de décision peuvent être utilisés pour fournir des signaux logiques correspondant aux différents états E1 à E16. Si on apelle FQ, FP, FQ2, FQ2′, FP2 et FP2′ les signaux à la sortie des circuits de décision 119, 120, 134, 135, 136 et 137 respectivement, un circuit de codage 170 fournit des signaux représentant les états E1 à E16. Le circuit de codage 170 effectue les opérations logiques suivantes.

$$E3 = FQ2 \cdot FP2$$
$$E7 = FQ2 \cdot FP2'$$
$$E11 = FQ2' \cdot FP2'$$
$$E15 = FQ2' \cdot FP2$$
$$E4 = FQ2 \cdot FP \cdot \overline{E3}$$
$$E2 = FP2 \cdot FQ \cdot \overline{E3}$$
$$E1 = FP \cdot FQ \cdot \overline{E3} \cdot \overline{E2} \cdot \overline{E4}$$
$$E8 = FP2' \cdot FQ \cdot \overline{E7}$$
$$E6 = \overline{FP} \cdot FQ2 \cdot \overline{E7}$$
$$E5 = \overline{FP} \cdot FQ \cdot \overline{E7} \cdot \overline{E6} \cdot \overline{E8}$$
$$E12 = \overline{FP} \cdot FQ2' \cdot \overline{E11}$$
$$E10 = FP2' \cdot \overline{FQ} \cdot \overline{E11}$$
$$E9 = \overline{FP} \cdot \overline{FQ} \cdot \overline{E11} \cdot \overline{E10} \cdot \overline{E12}$$
$$E16 = FP2 \cdot \overline{FQ} \cdot \overline{E15}$$
$$E14 = FQ2' \cdot \overline{FQ} \cdot \overline{E15}$$
$$E13 = FP \cdot \overline{FQ} \cdot \overline{E15} \cdot \overline{E14} \cdot \overline{E16}$$

Il est bien évident qu'à partir des circuits de décision et des circuits logiques, les états peuvent être déterminés directement par des dibits; par exemple, le premier dibit d'un état donne le numéro du quadrant, ceci est obtenu par les comparateurs 119 et 120 et le deuxième dibit donne la place du dibit dans le quadrant ceci est obtenu par les comparateurs 134 à 137 et les portes 150 et 151.

A la figure 6, on a représenté la constitution schématique de l'organe de commande de gain 61. Il se compose d'un amplificateur 180 dont l'entrée est reliée au fil F147 connecté en sortie de la porte OU 147; la sortie de cet amplificateur est connectée à une extrémité d'une résistance 181 dont l'autre extrémité est reliée à la masse par l'intermédiaire d'un montage en parallèle d'un condensateur 182 et d'une autre résistance 183. Ce montage est connecté à une entrée d'un amplificateur différentiel de gain G 185 dont l'autre entrée reçoit une tension de référence. C'est la tension de sortie de cet amplificateur 185 qui fixe le gain de l'amplificateur de commande de gain 60.

Les signaux actifs sur le fil F147 indiquent des données régénérées ayant au moins une de leur coordonnée supérieure aux valeurs maximales (états E3, E7, . . .). Au moyens de ces signaux actifs, l'organe 61 maintient à une valeur de consigne, fonction de la statistique des signaux émis, la proportion des états régénérés ayant cette propriété.

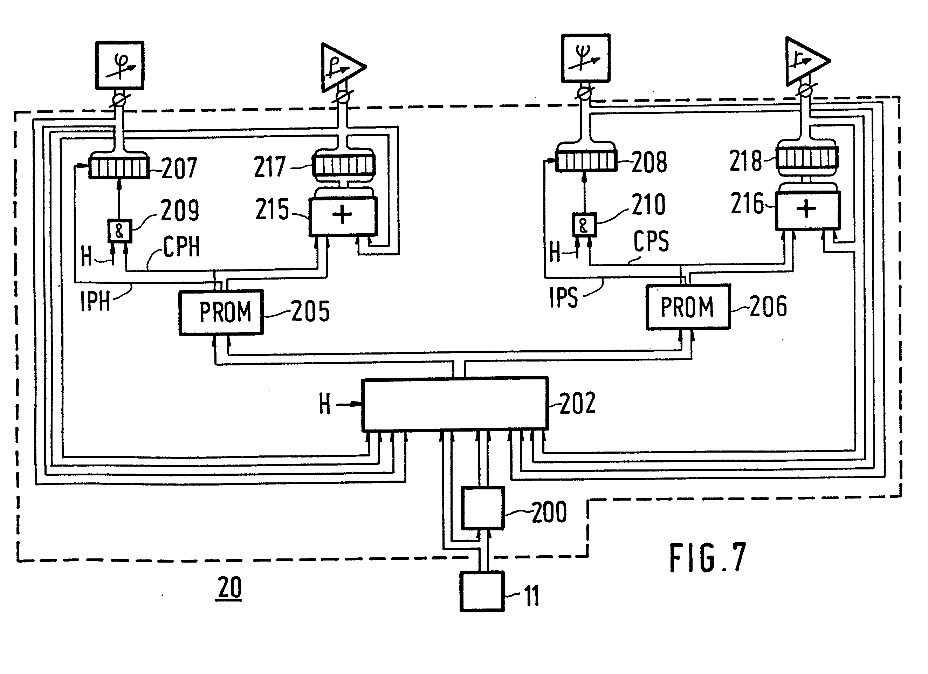

A la figure 7, on montre en détail la réalisation du circuit de commande 20. Les entrées du circuit 20 sont constituées par les données régénérées et du signal d'erreur entre le signal reçu et la valeur nominale de ce signal correspondant à ces données régénérées. Il se compose d'un ensemble de circuit de retard de valeur multiple de T dont l'entrée est reliée à l'entrée d'un circuit échantillonneur 202 commandé par les signaux H du générateur de cadencement 125, les sorties de ce circuit-échantillonneur servent à transmettre un code d'adresse pour deux mémoires à lecture seule 205 et 206. A ces codes d'adresse vont correspondre des mots de commande. Les mots de commande issus de la mémoire 205 sont utilisés pour le réglage des paramètres $\Phi$ et $\rho$ de la partie 3a et ceux issus de la mémoire 206 pour les paramètres $\psi$ et r de la partie 3b. Ces mots de commande ne sont pas utilisés tels quels. Ainsi c'est le contenu d'un compteur-décompteur 207 qui détermine complètement la valeur $\Phi$; d'une manière similaire, c'est un autre compteur-décompteur 208 qui détermine la valeur $\psi$. Deux éléments binaires des mots de commande issus des mémoires 205 et 206 suffisent à commander les compteurs 207 et 208. Un élément binaire transmis par un fil CPH connecté en sortie de la mémoire 205 autorise ou non, selon sa valeur, au moyen d'une porte ET 209 le passage d'un signal d'horloge H pour la progression du compteur-décompteur 207. De la même manière, un élément binaire transmis par un fil CPS qui interconnecte une porte ET 210 avec une sortie de la mémoire 206 autorise ou non, selon sa valeur, le changement du contenu du compteur-décompteur 208. Un élément binaire transmis par un fil IPH issu de la mémoire 205 met, en fonction de sa valeur, le compteur-décompteur 207 en position de comptage ou de décomptage. Un élément binaire transmis par un fil IPS issu de la mémoire 206 met, en fonction de sa valeur, le compteur-décompteur 208 en position de comptage ou de décomptage. Pour le réglage des paramètres $\rho$ et r on utilise respectivement, un additionneur 215, 216 et une mémoire tampon 217 et 218. Ce sont les contenus des mémoires tampons 217 et 218 qui fixent les valeurs $\rho$ et r; dans ces mémoires, on a la valeur de la somme entre la valeur précédente avec un incrément positif ou négatif élaboré par les mémoires 205 ou 206. Les valeurs des paramètres $\Phi$, $\rho$, $\psi$, r sont réintroduites, au moins pour les éléments binaires de plus fort poids aux entrées des mémoires 205 et 206 par l'intermédiaire de l'échantillonneur 202.

Les mémoires 205 et 206 sont programmées pour réaliser l'estimation des fonctions A

$$(\vec{e}, \frac{\partial \vec{e}}{\partial \rho}), \ B\ (\vec{e}, \frac{\partial \vec{e}}{\partial \Phi}), \ C\ (\vec{e}, \frac{\partial \vec{e}}{\partial r}), \ D\ (\vec{e}, \frac{\partial \vec{e}}{\partial \psi}) \qquad \text{en}$$

fonction des valeurs courantes des paramètres $\rho$, $\Phi$, $\psi$, r des données et du signal d'erreur, ainsi que des valeurs de données à des instants $(t \pm nT)$.

On examine tout d'abord le cas de la mémoire 205.

Si on appelle $y(t)$ et $v(t)$, respectivement les signaux d'entrée et de sortie de la partie 3b, on a alors:

$$(10) \quad v(t) = y(t) + k\,v(t-\tau) \ \text{où} \ k = re^{i\psi}$$

$$\frac{\partial v(t)}{\partial r} = e^{i\psi}\,v(t-\tau) + k\,\frac{\partial}{\partial r}\,v(t-\tau) + \frac{\partial t}{\partial r}\,\frac{\partial v}{\partial t}$$

$$\frac{\partial v(t)}{\partial t} = \left[\ \frac{\partial y(t)}{\partial t}\ + k\frac{\partial v(t-\tau)}{\partial t}\ \right]$$

le terme $\dfrac{\partial v}{\partial t}$ est dû à la variation de l'échantillonnage entrainée par une modification de r.

Or le circuit de récupération 125 œuvre pour que l'énergie soit maximale à l'instant d'échantillonnage, l'énergie est proportionnelle à:

$$v^2(t) = y^2(t) + k^2 v^2(t-\tau) + 2ky(t)\,v(t-\tau)$$

à l'instant d'échantillonnage on a:

$$\frac{\partial}{\partial t}\,v^2(t) = 0$$

c'est-à-dire:

$$\frac{\partial y(t)}{\partial t}\ + k\frac{\partial v(t-\tau)}{\partial t} = \frac{\partial v(t)}{\partial t}\ = 0$$

D'autre part, on cherche à évaluer le gradient de l'erreur e:

$e = v(t) - \hat{v}(t)$ où $\hat{v}(t)$ est la valeur estimée et le gradient

$$\frac{\partial e}{\partial r} = \frac{\partial v(t)}{\partial r} - \frac{\partial \hat{v}(t)}{\partial r}$$

la valeur $\hat{v}(t)$ est telle que

$$\hat{v}(t) = E_t\,[v(t)]$$

où $E_t$ indique la valeur moyenne à l'instant t de la grandeur entre crochets.

$$\frac{\partial e}{\partial r} = e^{i\psi}\,v(t-\tau) + k\,\frac{\partial}{\partial r}\,v(t-\tau)$$

$$-e^{i\psi}\,E_t\Big[v(t-\tau)\Big] - k\,E_t\Big[\frac{\partial}{\hat{v}r}\,v(t-\tau)\ \Big]$$

Pour simplifier la réalisation, le gradient de l'erreur n'est évalué que pour deux états crêtes distants de nT, et pour ce paramètre particulier pour deux états crêtes successifs (n = 1), c'est-à-dire les états E3, E7, E11 et E15 (fig. 3).

L'évaluation de ce gradient est faite par:

$$E_{t,\,t-T}\left[\ \frac{\partial e}{\partial r}\ \right]$$

c'est-à-dire la valeur moyenne prise par celui-ci, les valeurs v étant fixées aux instants t et t-T

$$E_{t,t-T}\left[\ \frac{\partial e}{\partial r}\ \right] = e^{i\psi}\,E_{t,t-T}\{v(t-\tau) - E_t\Big[\ v(t-\tau)\ \Big]\}$$

$$+ k\, E_{t,t-T}\left\{ \frac{\partial v(t-\tau)}{\partial r} - E_t\left[ \frac{\partial v(t\tau)}{\partial r} \right] \right\}$$

Au voisinage de l'égalisation, on peut écrire en posant $\tau = T/2$

$$E_{t,\,t-T}\,[v(t-T/2)] = [v(t) + v(t-T)]\, h_{(t-1/2)}$$

$h_{(t-T/2)}$ est la valeur prise par la réponse impulsionnelle du filtre représentant la fonction de transfert globale du canal en l'absence de perturbation; cette valeur sera représentée plus simplement par $h_{1/2}$.

De plus:

$$E_t\,[v(t-T/2)] = v(t).h_{1/2}$$

L'évaluation de $\dfrac{\partial}{\partial r}\, v(t-T/2)$ se fait au moyen de la formule de récurrence:

$$\frac{\partial}{\partial r}v(t-T/2) = e^{i\Psi}\, v(t-T) + k\,\frac{\partial v(t-T)}{\partial r}$$

d'où:

$$E_{t,t-T}\left[ \frac{\partial}{\partial r} v(t-T/2) \right] = e^{i\Psi} v(t-T)$$

$$+ re^{2i\Psi}\left[ h_{1/2}v(t-T) + h_{3/2}\, v(t) \right]$$

$$+ r^3 e^{4i\Psi}\left[ h_{3/2}v(t-T) + h_{5/2}\, v(t) \right] + \ldots$$

$$E_t\left[ \frac{\partial}{\partial r} v(t-T/2) \right] = r\, e^{2i\Psi}\left[ h_{3/2}\, v(t) \right]$$

$$+ r^3 e^{4i\Psi}\left[ h_{5/2}\, v(t) \right] + \ldots$$

d'où en ne considérant que les premiers termes:

$$E_{t,t-T}\left[ \frac{\partial e}{\partial r} \right] = e^{E\Psi} v(t-T)\left[ h_{1/2}\,(I + r^2 e^{2i\Psi}) + re^{i\Psi} \right]$$

De la même manière que l'on a estimé la valeur du gradient de l'erreur par rapport à r, on estimera le gradient de l'erreur par rapport à $\psi$:

$$E_{t,t-T}\left[ \frac{\partial e}{\partial \Psi} \right] = E_{t,t-T}\left[ ire^{i\Psi} v(t-T/2) + re^{i\Psi}\, \frac{\partial}{\partial \Psi} v(t-T/2) \right]$$

$$- ire^{i\Psi}\, E_t\left[ v(t-T/2) \right] - re^{i\Psi}\, E_t\left[ \frac{\partial}{\partial \Psi} v(t-T/2) \right]$$

et finalement

$$E_{t,t-T}\left[ \frac{\partial e}{\partial \Psi} \right] = ir\, E_{t,t-T}\left[ \frac{\partial e}{\partial r} \right]$$

Les grandeurs qui vont constituer le code d'adresse de la mémoire 205 vont être:

— 3 éléments binaires déterminant l'erreur, celle-ci est considérée uniquement si le point représentant le signal reçu se trouve dans les zones hachurées de la figure 3, c'est-à-dire si ce point est tel que p et q > |3| l'erreur sera considérée avec un signe «+» ou «—» selon que ledit point se trouve situé d'un côté ou de l'autre des droites d'équation p+q = 0 et p−q = 0. Le signal d'erreur sera élaboré par des signaux transmis par des fils F116 et F118 connectés aux sorties des circuits 116 et 148 et sera validé par le signal transmis par le fil F147 connecté en sortie de la porte 147.

— les éléments binaires représentant les états régénérés aux instants t et t-T.

— les éléments binaires de plus fort poids pour déterminer les valeurs $\psi$ et r.

On examine maintenant le cas de la mémoire 206.

Si on appelle $x(t)$ et $y(t)$, respectivement les signaux d'entrée et de sortie de la partie 3a, on a alors:

$$(20) \quad y(t) = \rho\, x(t) + e^{i\Phi} x(t-\tau)$$

Les filtrages effectués par les parties 3a et 3b étant de type linéaire, sont commutables de sorte que l'on peut introduire la variable fictive $z(t)$ qui serait telle que:

$$v(t) = \rho\, z(t) + e^{i\Phi} z(t-\tau)$$

On écrit:

$$\frac{\partial v(t)}{\partial \rho} = z(t)$$

d'où:

$$\frac{\partial e}{\partial \rho} = z(t) - E_t\left[ z(t) \right]$$

par récurrence, on montre:

$$z(t) = e^{-i\Phi}v(t+T/2) - \rho e^{-2i\Phi}v(t+T) + \rho^2 e^{-3i\Phi}v(t+3T/2) - \rho^3 e^{-4i\Phi} \ldots$$

Finalement, on obtient en limitant le développement aux termes en $\rho^2$:

$$E_{t,t+T}\left[\frac{\partial e}{\partial \rho}\right] = e^{-i\Phi}\left[h_{1/2}(1+\rho^2 e^{-2i\Phi}) - \rho e^{-i\Phi}\right]v(t+T)$$

On peut montrer aussi:

$$E_{t,\,t+T}\left[\frac{\partial e}{\partial \Phi}\right] = -i\rho\, E_{t,\,t+T}\left[\frac{\partial e}{\partial \rho}\right]$$

D'une manière semblable à l'adressage de la mémoire 205, l'adressage de la mémoire 206 sera effectué à partir des éléments binaires représentant l'erreur, des éléments binaires représentant les états régénérés aux instants t et t+T, ainsi que des éléments binaires de plus fort poids des grandeurs $\rho$ et $\Phi$.

Bien qu'on ait décrit un mode de réalisation dans lequel le circuit de correction comporte un seul élément de retard, l'invention s'applique évidemment au cas où ce circuit comporte n éléments de retard. Les données à considérer pour l'adaptation du paramètre de rang n seront alors distantes de nT.

## Revendications

1. Dispositif d'égalisation en fréquence porteuse commandé à partir de la bande de base comportant un circuit de correction pour des signaux de données transmis par fréquence porteuse, un premier circuit de démodulation, coopérant avec un circuit de reconstitution de porteuse, pour transformer ces signaux de données à fréquence porteuse en signaux en bande de base et un circuit de commande pour agir sur des éléments variables dont est muni le circuit de correction, à partir de l'erreur estimée sur les signaux en bande de base, caractérisé en ce que le circuit de correction comporte au moins une partie récursive pour faire correspondre à un signal d'entrée x(t) en fréquence porteuse, fonction continue du temps «t», un signal de sortie v(t) en fréquence porteuse, fonction continue du temps selon la relation:

$$v(t) = \sum_{l=1}^{M} r_l e^{i\Psi_l} v(t-\tau_l) + \sum_{j=0}^{N} \rho_j e^{i\Phi_j} x(t-\tau_j)$$

où $r_l$, $\psi_l$, $\rho_j$, $\Phi_j$ peuvent être des éléments variables où il existe au moins un «$l$» tel que $r_l \neq 0$, et où $\tau_j$, $\tau_l$ sont des retards fixes et M et N des constantes.

2. Dispositif d'égalisation selon la revendication 1, caractérisé en ce que le circuit de correction est formé d'un deuxième circuit de démodulation coopérant avec un circuit d'oscillation à fréquence prédéterminée égale à la valeur nominale de la fréquence de porteuse, de circuits d'égalisation opérant sur les signaux de sortie du deuxième circuit de démodulation et d'un circuit de modulation coopérant avec ledit circuit d'oscillation à fréquence prédéterminée pour fournir des signaux corrigés à l'entrée du premier circuit de démodulation tandis que les signaux à corriger sont appliqués à l'entrée du deuxième circuit de démodulation.

3. Dispositif d'égalisation selon l'une des revendications 1 ou 2, caractérisé en ce qu'il est prévu un amplificateur placé en amont du premier circuit de démodulation muni d'une commande de gain reliée à un organe de commande de gain pour garder constante, en moyenne la proportion de signaux ayant au moins une de leurs coordonnées supérieure à la valeur maximale nominale.

4. Dispositif d'égalisation selon l'une des revendications 1 à 3, caractérisé en ce que le circuit de commande est formé de moyens pour la mise en œuvre d'un algorithme dérivé de l'algorithme du gradient stochastique réalisé à l'aide d'un circuit de mémoire morte dont les codes d'adresses sont constitués par un premier code représentant la valeur des éléments variables par un deuxième code et un troisième code élaborés à partir du premier circuit de démodulation, le deuxième code représentant la donnée fournie, le troisième code, la valeur de l'erreur et par un quatrième code fourni par une mémoire de retard de nT (1/T étant la fréquence de transmission des données) dont les entrées reçoivent les troisième et quatrième codes, un circuit d'échantillonnage étant prévu pour fournir à la mémoire morte les codes au rythme des données transmises, tandis que les codes de sortie de la mémoire morte sont utilisés pour fixer la valeur des éléments variables selon ledit algorithme dérivé.

5. Dispositif d'égalisation selon l'une des revendications 1 à 4, caractérisé en ce que le circuit de correction établit une relation de correspondance:

$$v(t) = r e^{i\psi} v(t\text{-}T/2) + \rho e^{i\Phi} x(t\text{-}T/2) + x(t)$$

où r, $\psi$, $\rho$, $\Phi$ sont les éléments variables, 1/T la fréquence de transmission des données.

6. Dispositif d'égalisation selon la revendication 3 ou 4 pour lequel les signaux de données sont modulés selon la modulation MAQ, caractérisé en ce que le circuit de commande comporte des moyens de sélection pour ne considérer que des états crêtes séparés par des instants nT, les états crêtes étant des états dont l'amplitude est la plus grande.

## Patentansprüche

1. Basisbandgesteuerte Trägerfrequenzentzerrerschaltung mit einer Korrekturschaltung für trägerfrequente Datensignale, einer ersten Demodulationsschaltung, die mit einer Trägerwiederherstellungsschaltung zusammenarbeitet zum Umwandeln dieser trägerfrequenten Datensignale in

Basisbandsignale und mit einer Steuerschaltung zum Beeinflussen der veränderlichen in der Korrekturschaltung vorgesehenen Elemente in Antwort auf den geschätzten Fehler der Basisbandsignale, dadurch gekennzeichnet, dass die Korrekturschaltung mindestens einen rekursiven Teil aufweist, damit ein trägerfrequentes Ausgangssignal v(t), das eine kontinuierliche Funktion der Zeit «t» ist, entsprechend der Beziehung:

$$v(t) = \sum_{l=1}^{M} r_l e^{i\Psi_l} v(t-\tau_l) + \sum_{j=o}^{N} \rho_j e^{i\Phi_j} x(t-\tau_j)$$

verknüpft wird mit einem trägerfrequenten Eingangssignal x(t), das eine kontinuierliche Funktion der Zeit «t» ist, wobei $r_l$, $\psi_l$, $\rho_j$, $\Phi_j$ veränderliche Elemente sein können und es mindestens ein «$l$» gibt, wofür $r_l \neq 0$ ist und wobei $\tau_j$ und $\tau_l$ feste Verzögerungen und M und N Konstanten sind.

2. Entzerrerschaltung nach Anspruch 1, dadurch gekennzeichnet, dass die Korrekturschaltung aus einer zweiten Demodulationsschaltung gebildet ist, die mit einem Oszillator mit einer vorbestimmten Frequenz gleich dem Nennwert der Trägerfrequenz zusammenarbeitet, sowie aus Entzerrerschaltungen, die Ausgangssignale der zweiten Demodulationsschaltung verarbeiten und aus einer Modulationsschaltung, die mit dem genannten Oszillator vorbestimmter Frequenz zusammenarbeitet zum Liefern korrigierter Signale am Eingang der ersten Demodulationsschaltung, während die zu korrigierenden Signale dem Eingang der zweiten Demodulationsschaltung zugeführt werden.

3. Entzerrerschaltung nach einem der Ansprüche 1 oder 2, dadurch gekennzeichnet, dass ein Verstärker vorgesehen ist, der vor der ersten Demodulationsschaltung angeordnet und mit einer Verstärkungsregelung versehen ist, die mit einem Verstärkungsregelelement verbunden ist zum auf einem im Durchschnitt konstanten Wert Halten des Anteiles der Signale, von denen mindestens einer der Koordinaten höher ist als der maximale Nennwert.

4. Entzerrerschaltung nach einem der Ansprüche 1 bis 3, dadurch gekennzeichnet, dass die Steuerschaltung aus Mitteln gebildet ist zum Implementieren eines Algorithmus, der von dem stochastischen Gradientenalgorithmus abgeleitet ist, und zwar mit Hilfe einer Festwertspeicherschaltung, deren Adressenkodes gebildet sind durch einen ersten Kode, der den Wert der veränderlichen Elemente darstellt, durch einen zweiten und einen dritten Kode, die von der ersten Demodulationsschaltung abgeleitet sind, wobei der zweite Kode die gelieferten Daten und der dritte Kode den Wert des Fehlers darstellen, sowie durch einen vierten Kode, der von einem Speicher mit einer Zeitverzögerung gleich nT geliefert wird (wobei 1/T die Datenübertragungsgeschwindigkeit ist), wobei die Eingänge des Speichers den dritten und vierten Kode erhalten und wobei eine Abtastschaltung vorgesehen ist zum der Festwertspeicherschaltung Liefern der Kodes im Takte

der übertragenen Daten, während die Ausgangskodes der Festwertspeicherschaltung dazu verwendet werden, den Wert der veränderlichen Elemente entsprechend dem genannten abgeleiteten Algorithmus festzulegen.

5. Entzerrerschaltung nach einem der Ansprüche 1 bis 4, dadurch gekennzeichnet, dass die Korrekturschaltung eine Beziehung herstellt entsprechend:

$$v(t) = re^{i\psi} v(t-T/2) + \rho e^{i\Phi} x(t-T/2) + x(t)$$

wobei r, $\psi$, $\rho$, $\Phi$ die veränderlichen Elemente sind und 1/T die Datenübertragungsfrequenz ist.

6. Entzerrerschaltung nach Anspruch 3 oder 4, für welche die Datensignale entsprechend der QAM-Modulationsmethode moduliert sind, dadurch gekennzeichnet, dass die Steuerschaltung Selektionsmittel aufweist, die nur die in einem Abstand von nT auseinander liegenden Spitzenzustände berücksichtigen, wobei die Spitzenzustände die Zustände mit der grössten Amplitude sind.

**Claims**

1. A baseband-controlled passband equalizing arrangement comprising a correction circuit for data signals transmitted by modulating a carrier frequency, a first demodulation circuit cooperating with a carrier recovery circuit for converting these carrier-modulated data signals into baseband signals, and a control circuit acting on variable elements provided in the correction circuit in response to an estimated error of the baseband signals, characterized in that the correction circuit includes at least a recursive part for producing in response to a carrier frequency input signal x(t), which is a continuous function of the time «t», a carrier frequency output signal v(t), which is a continuous function of the time «t» in accordance with the relation:

$$v(t) = \sum_{l=1}^{M} r_l e^{i\Psi_l} v(t-\tau_l) + \sum_{j=o}^{N} \rho_j e^{i\Phi_j} x(t-\tau_j)$$

where $r_l$, $\psi_l$, $\rho_j$, $\Phi_j$ may be variable elements and there is at least one «$l$» such that $r_l \neq 0$, and where $\tau_j$, $\tau_l$ are fixed delays and M and N are constants.

2. An equalizing arrangement as claimed in Claim 1, characterized in that the correction circuit is constituted by a second demodulation circuit cooperating with an oscillator circuit of a predetermined frequency equal to the nominal value of the carrier frequency, equalizing circuits acting on the output signals of the second demodulation circuit and a modulation circuit cooperating with said oscillator circuit of the predetermined frequency to apply the corrected signals to the input of the first demodulation circuit whilst the signals to be corrected are applied to the input of the second demodulation circuit.

3. An equalizing arrangement as claimed in one of the Claims 1 or 2, characterized in that the arrangement is provided with an amplifier arranged

upstream of the first demodulation circuit and comprising a gain control connected to a gain control unit for keeping the proportion of signals having at least one of their co-ordinates higher than the maximum nominal value at a level which is, on an average, constant.

4. An equalizing arrangement as claimed in anyone of the Claims 1 to 3, characterized in that the control circuit is formed by means for implementing an algorithm derived from the stochastic gradient algorithm realized with the aid of a read-only memory circuit whose address codes are constituted by a first code representing the value of the variable elements, by second and third codes derived from the first demodulation circuit, the second code representing the supplied data and the third code representing the value of the error, and by a fourth code supplied by a memory having a time delay of nT (1/T being the data transmission rate) whose inputs receive the third and fourth codes, a sampling circuit being provided to apply the codes to the read-only memory circuit at the rate of the transmitted data, whilst the output codes of the read-only memory circuit are used to fix the value of the variable elements in accordance with the said derived algorithm.

5. An equalizing arrangement as claimed in anyone of the Claims 1 to 4, characterized in that the correction circuit establishes a relationship:

$$v(t) = re^{i\psi} v(t-T/2) + \rho e^{i\Phi} x(t-T/2) + x(t)$$

where $r$, $\psi$, $\rho$, $\Phi$, are variable elements and $1/T$ is the data transmission rate.

6. An equalizing arrangement as claimed in Claim 3 or 4 for which the data signals are modulated in accordance with the QAM modulation method, characterized in that the control circuit comprises a selection means for only taking account of the peak states which are spaced apart by instants nT, the peak states being the states of the greatest amplitudes.

FIG.1

FIG.2f

FIG.2a

FIG.2b

FIG.2c

FIG.2d

FIG.2e

FIG.2g

FIG.3

FIG.4

FIG.6

FIG.5

FIG.7